# EUROPEAN PATENT SPECIFICATION

(11) **EP 3 313 725 B1**
(45) Date of publication and mention of the grant of the patent: **18.09.2019**
(21) Application number: 16733042.2
(22) Date of filing: 23.06.2016
(51) Int. Cl.: B63B 59/02, E02B 17/00, E02B 3/26

(54) **A FENDER AND A VESSEL COMPRISING A FENDER**
FENDER UND SCHIFFSFENDER
DÉFENSE ET DÉFENSE DE NAVIRE

(30) Priority: 24.06.2015 EP 15173649
(43) Date of publication of application: 02.05.2018
(73) Proprietor: BV Scheepswerf Damen Gorinchem, 4200 AA Gorinchem (NL)
(72) Inventor: MEWIS, Bastiaan Hendrikes, 4285 WG Woudrichem (NL); VAN OOSTEN, Cornelis Anton, 6673 AE Andelst (NL)
(74) Representative: De Vries & Metman
(86) International application number: PCT/EP2016/064549
(87) International publication number: WO 2016/207284

(56) References cited:
- EP-A1- 2 818 400
- EP-A2- 1 695 902
- US-B1- 7 527 454

## Description

The present invention relates to a fender for a vessel for positioning the vessel against a stationary or floating object according to the preamble of claim 1.

A fender for absorbing impacts during berthing of a vessel at a stationary or floating object is known in the prior art, for example a foam fender including a closed-cell polyethylene foam core and an outer skin of reinforced polyurethane elastomer. The known fender is attached to a vessel and keeps the vessel in place against a stationary or floating object by means of friction. During a period of contact between the fender of the vessel and the stationary or floating object, the vessel is propelled forwardly such that the fender more or less adheres to the stationary object. This means that the fender remains at about the same location with respect to the stationary object, whereas the stern of the vessel may move up and down due to waves. Consequently, the fender does not only absorb energy from the horizontal impact during berthing, but also vertical shear forces during the period of contact with the stationary object. A disadvantage of the known fender is that it wears very quickly due to heavy loads during use.

EP 2 818 400 relates to a marine fender which is designed to be removably suspended from a marine structure or a vessel by means of one or more lines and/or ropes, in which the fender is provided with an inner and an outer continuous wall and one or more cavities, in which the fender comprises two closed outer side walls which are arranged at an angle to the longitudinal direction of the fender and which each connect the inner wall to the outer wall and each delimit at least one closed cavity, and the inner wall comprises an indentation which is configured in such a way that the outer side walls and/or the intermediate side walls which are arranged at an angle to the inner and outer wall are prevented from bending and/or the fender is prevented from tearing if it is being compressed.

An object of the invention is to provide a fender with increased lifetime.

This object is accomplished with the fender according to the invention, which is characterized in that two neighbouring connection elements are attached to each other at an intermediate junction located between the front wall and the rear wall.

This provides a spring behaviour of the fender which may be desired for certain applications of the fender. The intermediate junction may be a type of connection element, as well, which extends in a direction parallel to the shock-absorber side.

An impact force of a stationary or floating object onto the fender according to the invention causes bending of the connection members. This provides an appropriate and predictable profile of impact energy absorption. The space between neighbouring connection elements may be void. Since the number of front wall junctions and rear wall junctions per meter is limited, i.e. the number of connection elements per meter in longitudinal direction of the fender is limited, an advantageous impact performance of the fender is reached when a ship including the fender is positioned against an object having a contact surface which is much smaller than the length of the fender. This may happen, for example, when the object has one or more posts against which the ship should be held. It is noted that the distance between front wall junctions as well as between rear wall junctions may vary. If they are located equidistantly, the distance between neighbouring junctions is larger than 10 cm, but in practice the distance may be larger than 25 cm, for example.

The distance between the front wall and the rear wall may be 200-1000 mm in non-deformed condition, but the deformation portion may be decreased down to 40% of the initial distance under deformed condition.

In practice the fender may be substantially symmetrical.

The front wall junction and rear wall junction of at least one connection element may lie in a same plane that extends perpendicularly to the shock-absorber side, whereas the connection element comprises a curved portion. In this case, the front wall junction and rear wall junction are aligned, but the length of the connection member is longer than the shortest distance between the front wall junction and the rear wall junction because of the curved portion. The curved portion may comprise a U curve, for example.

In an alternative embodiment the connection elements extend obliquely with respect to the shock-absorber side as viewed in a direction from the upper side to the lower side. More specifically, at least two connection elements may diverge or converge as seen from the shock-absorber side to the fastening side. In other words, as seen from above the deformation portion comprises a lattice of connection members which are inclined with respect to the shock-absorber side.

The intermediate junction may be located closer to the shock-absorber side than to the fastening side in order to optimize the impact characteristic.

The number of intermediate junctions may be more than one, but less than four.

In a preferred embodiment the connection elements comprise plate segments extending transversely with respect to the shock-absorber side and the upper side. The thickness of the plate segments and/or the front wall and/or the rear wall may be 10-50 mm. The plate segments may have the same thickness as the rear wall and/or the front wall. This provides a predictive spring characteristic. The thickness of the front wall may be 25-50 mm and the thickness of the rear wall may be 20-40 mm. The plate segments extend upwardly, which creates a high stiffness in vertical direction of the fender. Portions of the front wall at the front wall junctions are directly supported in vertical direction by the plate segments and portions of the front wall which extend between neighbouring front wall junctions are indirectly supported by neighbouring plate segments. The ratio between height and length of each of the plate segments may be 75-300%.

The front wall junctions and the rear wall junctions may be parallel to each other in case of plate segments. In this case the junctions extend transversely to the upper side of the fender.

The front wall and the rear wall may be parallel, as well.

The plate segments may intersect at the intermediate junction, whereas the intermediate junction may be parallel to the front wall junctions and the rear wall junctions.

The connection element at opposite sides of the intermediate junction may be staggered in order to create a more predictable and repeatable spring performance of the fender.

The fender may be made from a single piece, for example by means of moulding. Casted poly urea may be applied for the entire fender. The resilient material may be polyurethane, natural rubber or an elastomer. Numerous visco elastic materials are conceivable. The weigh-to-volume ratio of the fender may be 250-500 kg/m3.

The fender may have a length which is larger than three times its width and larger than three times its height. The width and height of the fender may be more or less equal.

The upper side and/or the lower side of the fender may be open such that the cavities between the connection members are open at the upper side and the lower side of the fender. It is also possible to close or partly close the upper side and/or the lower side, for example by means of a flexible plate or sheet. In order to create a safe walking path on top of the fender it is preferred to close the cavities between the connection members at least partly at the upper side of the fender. On the other hand an open upper side facilitates inspection of the fender, whereas an open lower side can easily discharge water.

In order to minimize stress concentrations in the fender it is advantageous to apply radii at the front wall junctions, rear wall junctions and intermediate junctions, for example radii of 20-50 mm at those junctions. In general, edges can be rounded by 20-50% of the thickness of the corresponding portion of the fender.

The invention is also related to a vessel comprising a fender as described hereinbefore.

The invention will hereafter be elucidated with reference to drawings showing embodiments of the invention by way of example.
Fig. 1 is a plan view of a vessel including an embodiment of a fender according to the invention.
Fig. 2 is a side view of the vessel as shown in Fig. 1.
Fig. 3 is a perspective view of an embodiment of a fender according to the invention.
Fig. 4 is a plan view of the embodiment as shown in Fig. 3.
Fig. 5 is a similar view as Fig. 4, but illustrating functional parts of the fender.
Figs. 6-8 are similar views as Figs. 3-5, but showing an alternative embodiment.
Figs. 9-14 are similar views as Fig. 5, but showing alternative embodiments.

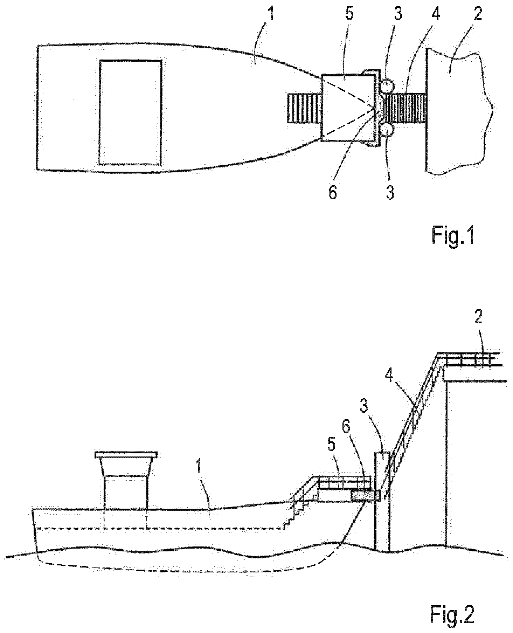

Fig. 1 shows a crew transfer vessel 1 which contacts an offshore stationary object 2, for example an offshore wind turbine. In practice, for transferring persons or materials between the vessel 1 and the stationary object 2 the vessel 1 is sailed to the object 2 and contacts two posts 3 of the object 2 between which a stairway 4 to a platform is located. The vessel 1 comprises a bridge 5 which provides a gateway between the vessel 1 and the stationary object 2.

The bow of the vessel 1 is provided with a fender 6, which keeps the vessel 1 in place against the stationary object 2. The fender 6 is an elastic member. During a period of contact between the vessel 1 and the stationary object 2, the vessel 1 is propelled forwardly such that the fender 6 in fact adheres to the posts 3. This means that under practical conditions the fender 6 remains at about the same location with respect to the posts 3, whereas the stern may move up and down due to waves. Consequently, the fender 6 does not only absorb energy from the horizontal impact during berthing, but it must also withstand vertical shear forces during the period of contact with the posts 3.

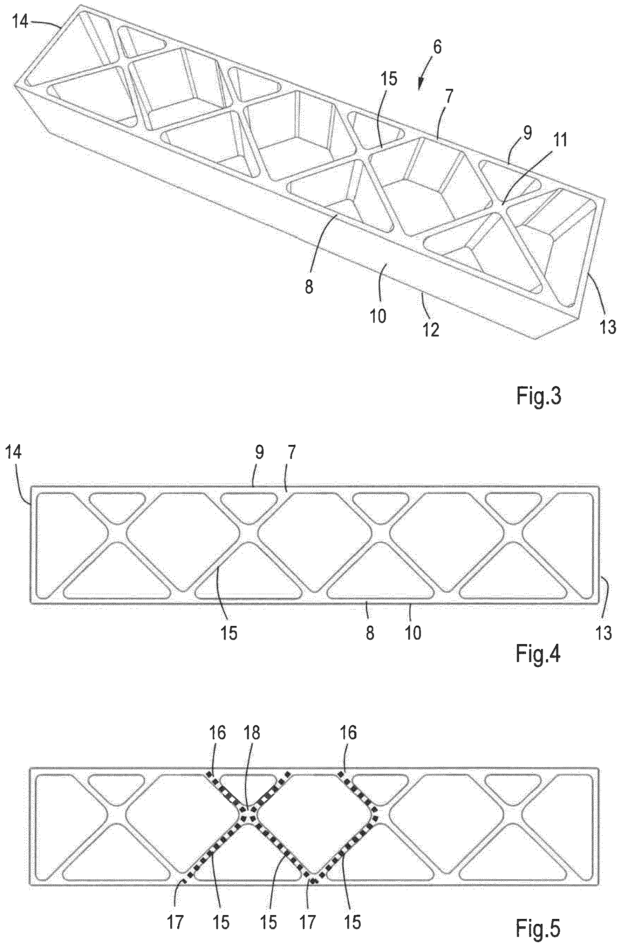

Figs. 3-5 show an embodiment of a fender 6 in more detail. The fender 6 comprises a front wall 7 and a rear wall 8. The front wall 7 has a shock-absorber side 9 for contacting the stationary object 2. The rear wall 8 has a fastening side 10 which can be fastened to the vessel 1. Furthermore, the fender 6 comprises an upper side 11, a lower side 12 and lateral sides 13, 14. The fender 6 has a block shape; the shock-absorber side 9, the fastening side 10, the upper and lower side 11, 12 have larger lengths than the lateral sides 13, 14 as seen from above. Hence, the longitudinal direction of the fender 6 extends parallel to the shock-absorber side 9, the fastening side 10, the upper side 11 and the lower side 12. It is noted that alternative shapes are conceivable.

The fender 6 is provided with a plurality of resilient connection elements 15 which form part of a lattice structure. In Fig. 5 three connection elements 15 are indicated by means of three broken lines. Each connection element 15 comprises a bent plate segment which is fixed to a front wall junction 16 and a rear wall junction 17 and which extends in vertical direction. This means that the length of each connection element 15 is larger than the shortest distance between the front wall 7 and the rear wall 8 at its corresponding front wall junction 16 or rear wall junction 17, as measured in a direction from the shock-absorber side 9 to the fastening side 10. In other words, when a virtual plane extending through the front wall junction 16 and perpendicular to the longitudinal direction of the fender 6 is considered, the shortest distance between the front wall 7 and the rear wall 8 is the length along the plane between the front wall 7 and the rear wall 8. The length measured along the bent plate segment 15 is larger than the mentioned shortest distance.

The connection elements 15 extend obliquely with respect to the fastening side 10 as viewed from above, i.e. as viewed in a direction from the upper side 11 to the lower side 12. In other words, the connection elements 15 are angled with respect to the front wall 7 at the respective front wall junctions 16, and the connection elements 15 are angled with respect to the rear wall 8 at the respective rear wall junctions 17. For example, the angle may be 30-60°, but alternative angles are conceivable.

In the embodiment as shown in Figs. 3-5 two neighbouring connection elements 15 are attached to each other at an intermediate junction 18 which is located between the front wall 7 and the rear wall 8. This embodiment has eight bent plate segments 15 and four intermediate junctions 18; a different number of plate segments 15 and intermediate junctions 18 are conceivable. The intermediate junctions 18 are located closer to the shock-absorber side 9 than the fastening side 10, which is advantageous in terms of impact characteristics.

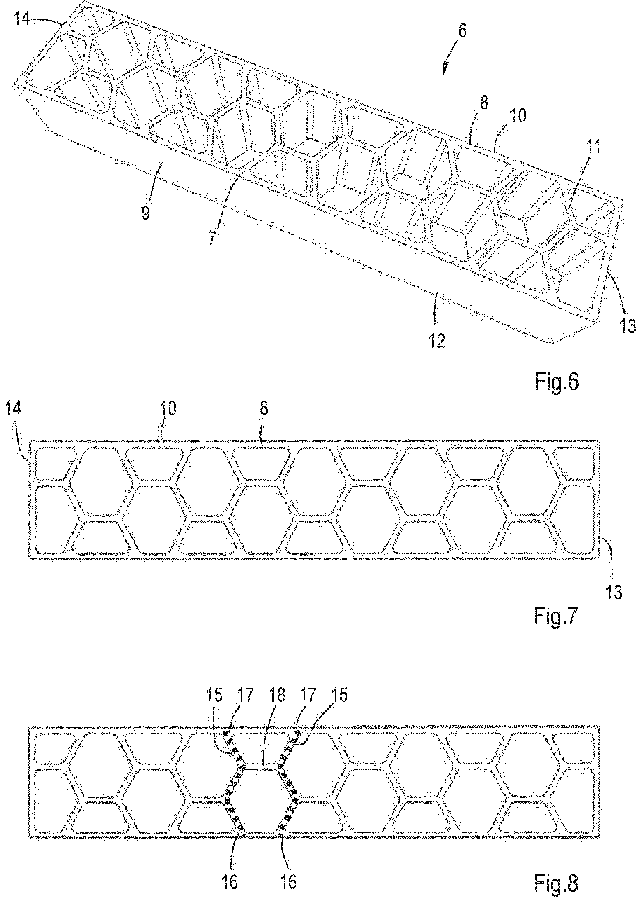

Figs. 6-8 show an alternative embodiment of the fender 6. Elements in these figures corresponding to the embodiment as shown in Figs. 3-5 are indicated by the same reference numbers. Broken lines in Fig. 8 illustrate two neighbouring connection elements 15 which are interconnected by the intermediate junction 18. In this embodiment the intermediate junction 18 comprises a plate segment extending in longitudinal direction of the fender 6, parallel to the fastening side 10 and the shock-absorber side 9. The connection elements 15 and the intermediate junctions 18 together form a honeycomb structure as viewed in a direction from the upper side 11 to the lower side 12.

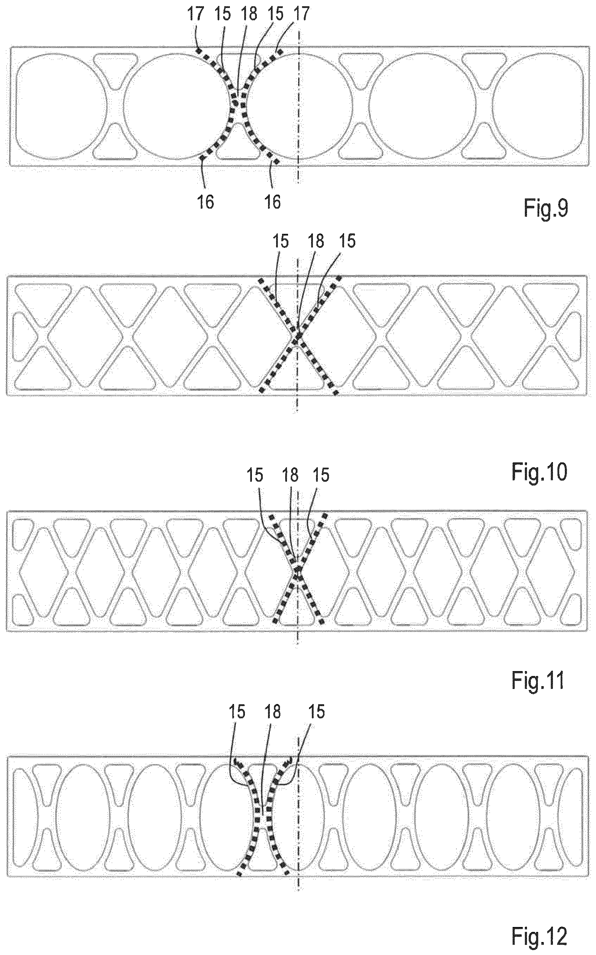

Figs. 9-14 show alternative embodiments of the fender 6. The plate segments 15 in the embodiments according to Figs. 9 and 12 are partly circular and oval shaped, respectively.

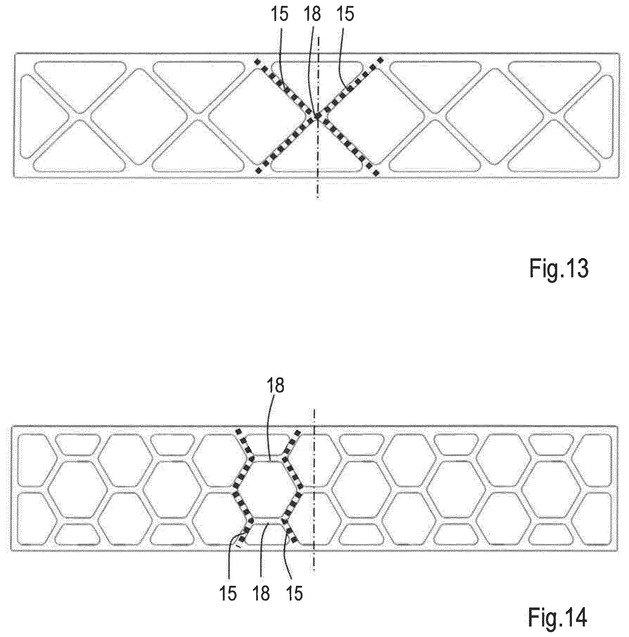

In the embodiment of Fig. 14 two neighbouring connection elements 15 in longitudinal direction of the fender 6 are interconnected by two intermediate junctions 18. As a result three cavities arise between the neighbouring connection elements 15.

The lengths of the fenders 6 as shown in the Figs. 3-15 is about 3m. The number of front wall junctions 16 as well as of rear wall junctions 17 in Figs. 3-5 is eight, such that the number amounts about 2.5 per meter. This is the same for the embodiment as shown Figs. 6-8. In the embodiment as shown in Fig. 11 the number is about 6.5 per meter.

The invention is not limited to the embodiments shown in the drawings and described hereinbefore, which may be varied in different manners within the scope of the claims.

## Claims

1. A fender (6) for a vessel (1) for positioning the vessel (1) against a stationary or floating object (2), comprising a resilient front wall (7) having a shock-absorber side (9) for contacting a stationary or floating object (2), a rear wall (8) having a fastening side (10) to be fastened to a vessel (1), an upper side (11), a lower side (12) and a deformation portion (15, 18) disposed between the front wall (7), the rear wall (8), the upper side (11) and the lower side (12), wherein the deformation portion comprises a plurality of resilient connection elements (15) which are fixed to the front wall (7) in respective front wall junctions (16) spaced from each other in a direction parallel to the front wall (7) and the upper side (11), on the one hand, and to the rear wall (8) in respective rear wall junctions (17) spaced from each other in a direction parallel to the rear wall (7) and the upper side (11), on the other hand, each of said connection elements (15) having a length between the front wall (7) and the rear wall (8) which exceeds the shortest distance between the front wall (7) and the rear wall (8) at its corresponding front wall junction (16) or rear wall junction (17), as measured in a direction from the shock-absorber side (9) to the fastening side (10), wherein the number of front wall junctions (16) as well as the number of rear wall junctions (17) is less than ten per meter, preferably less than seven per meter, **characterized in that** two neighbouring connection elements (15) are attached to each other at an intermediate junction (18) located between the front wall (7) and the rear wall (8).

2. A fender (6) according to claim 1, wherein the front wall junction (16) and rear wall junction (17) of at least one connection element (15) lie in a same plane that extends perpendicularly to the shock-absorber side (9), and the connection element (15) comprises a curved portion.

3. A fender (6) according to claim 1, wherein the connection elements (15) extend obliquely with respect to the shock-absorber side (9) as viewed in a direction from the upper side (11) to the lower side (12).

4. A fender (6) according to claim 3, wherein at least two connection elements (15) diverge or converge as seen from the shock-absorber side (9) to the fastening side (10).

5. A fender (6) according to one of the preceding claims, wherein the intermediate junction (18) is located closer to the shock-absorber side (9) than to the fastening side (10).

6. A fender (6) according to one of the preceding claims, wherein the number of intermediate junctions (18) is more than one, but less than four.

7. A fender (6) according to one of the preceding claims, wherein the connection elements (15) comprise plate segments extending transversely with respect to the shock-absorber side (9) and the upper side (11).

8. A fender (6) according to claim 7, wherein the front wall junctions (16) and the rear wall junctions (17) are parallel to each other.

9. A fender (6) according to claim 8, wherein the plate segments intersect at the intermediate junction (18), and the intermediate junction (18) is parallel to the front wall junctions (16) and the rear wall junctions (17).

10. A fender (6) according to claim 8, wherein the intermediate junction (18) comprises a plate segment extending in longitudinal direction of the fender (6).

11. A fender (6) according to claim 10, wherein the intermediate junction (18) extends parallel to the fastening side (10) and the shock-absorber side (9).

12. A fender (6) according to claim 10 or 11, wherein the connection elements (15) and the intermediate junctions (18) together form a honeycomb structure as viewed in a direction from the upper side (11) to the lower side (12).

13. A fender (6) according to one of the preceding claims, wherein the connection element (15) at opposite sides of the intermediate junction (18) is staggered.

14. A fender (6) according to one of the preceding claims, wherein the connection elements (15) and/or the front wall (7) and/or the rear wall (8) are made from a resilient material that allows more than 50% stretch or more than 100% stretch, and may be made of a homogenous elastomer.

15. A fender (6) according to one of the preceding claims, wherein the connection elements (15) and/or the front wall (7) and/or the rear wall (8) comprise respective strengthening weaves.

16. A fender (6) according to one of the preceding claims, wherein the fender is made from a single piece.

17. A vessel (1) comprising a fender (6) according to one of the preceding claims.

## Patentansprüche

1. Fender (6) für ein Schiff (1) zum Positionieren des Schiffs (1) an einem ortsfesten oder schwimmenden Objekt (2), der aufweist: eine elastische Vorderwand (7) mit einer Stoßdämpferseite (9) zum Berühren eines ortsfesten oder schwimmenden Objekts (2), eine Rückwand (8) mit einer Festmachseite (10), die an einem Schiff (1) festzumachen ist, eine Oberseite (11), eine Unterseite (12) und einen Verformungsabschnitt (15, 18), der zwischen der Vorderwand (7), der Rückwand (8), der Oberseite (11) und der Unterseite (12) angeordnet ist, wobei der Verformungsabschnitt mehrere elastische Verbindungselemente (15) aufweist, die befestigt sind einerseits an der Vorderwand (7) in jeweiligen Vorderwandanschlüssen (16), die in einer Richtung parallel zur Vorderwand (7) und zur Oberseite (11) voneinander beabstandet sind, und andererseits an der Rückwand (8) in jeweiligen Rückwandanschlüssen (17), die in einer Richtung parallel zur Rückwand (7) und zur Oberseite (11) voneinander beabstandet sind, wobei jedes der Verbindungselemente (15) eine Länge zwischen der Vorderwand (7) und der Rückwand (8) hat, die den kürzesten Abstand zwischen der Vorderwand (7) und der Rückwand (8) an ihrem entsprechenden Vorderwandanschluss (16) oder Rückwandanschluss (17) in der Messung in Richtung von der Stoßdämpferseite (9) zur Festmachseite (10) übersteigt, wobei die Anzahl von Vorderwandanschlüssen (16) sowie die Anzahl von Rückwandanschlüssen (17) kleiner als zehn pro Meter, vorzugsweise kleiner als sieben pro Meter ist, **dadurch gekennzeichnet, dass** zwei benachbarte Verbindungselemente (15) an einem Zwischenanschluss (18) aneinander angebracht sind, der zwischen der Vorderwand (7) und der Rückwand (8) liegt.

2. Fender (6) nach Anspruch 1, wobei der Vorderwandanschluss (16) und der Rückwandanschluss (17) mindestens eines Verbindungselements (15) in derselben Ebene liegen, die sich senkrecht zur Stoßdämpferseite (9) erstreckt, und das Verbindungselement (15) einen gekrümmten Abschnitt aufweist.

3. Fender (6) nach Anspruch 1, wobei sich die Verbindungselemente (15) schräg zur Stoßdämpferseite (9) mit Blick in Richtung von der Oberseite (11) zur Unterseite (12) erstrecken.

4. Fender (6) nach Anspruch 3, wobei mindestens zwei Verbindungselemente (15) mit Blick von der Stoßdämpferseite (9) zur Festmachseite (10) auseinander- oder zusammenlaufen.

5. Fender (6) nach einem der vorstehenden Ansprüche, wobei der Zwischenanschluss (18) näher an der Stoßdämpferseite (9) als an der Festmachseite (10) liegt.

6. Fender (6) nach einem der vorstehenden Ansprüche, wobei die Anzahl von Zwischenanschlüssen (18) größer als eins, aber kleiner als vier ist.

7. Fender (6) nach einem der vorstehenden Ansprüche, wobei die Verbindungselemente (15) Plattensegmente aufweisen, die sich quer zur Stoßdämpferseite (9) und zur Oberseite (11) erstrecken.

8. Fender (6) nach Anspruch 7, wobei die Vorderwandanschlüsse (16) und die Rückwandanschlüsse (17) parallel zueinander sind.

9. Fender (6) nach Anspruch 8, wobei sich die Plattensegmente am Zwischenanschluss (18) schneiden und der Zwischenanschluss (18) parallel zu den Vorderwandanschlüssen (16) und den Rückwandanschlüssen (17) ist.

10. Fender (6) nach Anspruch 8, wobei der Zwischenanschluss (18) ein Plattensegment aufweist, das sich in Längsrichtung des Fenders (6) erstreckt.

11. Fender (6) nach Anspruch 10, wobei sich der Zwischenanschluss (18) parallel zur Festmachseite (10) und zur Stoßdämpferseite (9) erstreckt.

12. Fender (6) nach Anspruch 10 oder 11, wobei die Verbindungselemente (15) und die Zwischenanschlüsse (18) gemeinsam eine Wabenstruktur mit Blick in Richtung von der Oberseite (11) zur Unterseite (12) bilden.

13. Fender (6) nach einem der vorstehenden Ansprüche, wobei das Verbindungselement (15) an Gegenseiten des Zwischenanschlusses (18) versetzt ist.

14. Fender (6) nach einem der vorstehenden Ansprüche, wobei die Verbindungselemente (15) und/oder die Vorderwand (7) und/oder die Rückwand (8) aus einem elastischen Material hergestellt sind, das über 50 % Dehnung oder über 100 % Dehnung ermöglicht, und aus einem homogenen Elastomer hergestellt sein können.

15. Fender (6) nach einem der vorstehenden Ansprüche, wobei die Verbindungselemente (15) und/oder die Vorderwand (7) und/oder die Rückwand (8) jeweilige Verstärkungsbindungen aufweisen.

16. Fender (6) nach einem der vorstehenden Ansprüche, wobei der Fender aus einem einzelnen Stück hergestellt ist.

17. Schiff (1) mit einem Fender (6) nach einem der vorstehenden Ansprüche.

## Revendications

1. Défense (6) d'un navire (1) pour positionner le navire (1) contre un objet fixe ou flottant (2), comprenant une paroi avant résiliente (7) ayant un côté amortisseur de choc (9) pour venir en contact avec un objet fixe ou flottant (2), une paroi arrière (8) ayant un côté d'arrimage (10) à arrimer à un navire (1), un côté supérieur (11), un côté inférieur (12) et une portion de déformation (15, 18) disposée entre la paroi avant (7), la paroi arrière (8), le côté supérieur (11) et le côté inférieur (12), dans laquelle la portion de déformation comprend une pluralité d'éléments de raccordement résilients (15) qui sont fixés à la paroi avant (7) dans des jonctions de paroi avant (16) respectives espacées les unes des autres dans une direction parallèle à la paroi avant (7) et au côté supérieur (11), d'une part, et à la paroi arrière (8) dans des jonctions de paroi arrière (17) respectives espacées les unes des autres dans une direction parallèle à la paroi avant (7) et au côté supérieur (11), d'autre part, chacun desdits éléments de raccordement (15) ayant une longueur entre la paroi avant (7) et la paroi arrière (8) qui dépasse la distance la plus courte entre la paroi avant (7) et la paroi arrière (8) au niveau de sa jonction de paroi avant (16) ou jonction de paroi arrière (17) correspondante, mesurée dans une direction entre le côté amortisseur de choc (9) et le côté d'arrimage (10), dans laquelle le nombre de jonctions de paroi avant (16) ainsi que le nombre de jonctions de paroi arrière (17) sont de moins de dix par mètre, de préférence moins de sept par mètre, **caractérisée en ce que** deux éléments de raccordement (15) voisins sont attachés l'un à l'autre au niveau d'une jonction intermédiaire (18) située entre la paroi avant (7) et la paroi arrière (8).

2. Défense (6) selon la revendication 1, dans laquelle la jonction de paroi avant (16) et la jonction de paroi arrière (17) d'au moins un élément de raccordement (15) se trouvent dans un même plan qui s'étend perpendiculairement au côté amortisseur de choc (9), et l'élément de raccordement (15) comprend une portion incurvée.

3. Défense (6) selon la revendication 1, dans laquelle les éléments de raccordement (15) s'étendent à l'oblique par rapport au côté amortisseur de choc (9) vus dans une direction du côté supérieur (11) au côté inférieur (12).

4. Défense (6) selon la revendication 3, dans laquelle au moins deux éléments de raccordement (15) divergent ou convergent vus du côté amortisseur de choc (9) au côté d'arrimage (10).

5. Défense (6) selon l'une des revendications précédentes, dans laquelle la jonction intermédiaire (18) est située plus près du côté amortisseur de choc (9) que du côté d'arrimage (10).

6. Défense (6) selon l'une des revendications précédentes, dans laquelle le nombre de jonctions intermédiaires (18) est de plus d'un, mais moins de quatre.

7. Défense (6) selon l'une des revendications précédentes, dans laquelle les éléments de raccordement (15) comprennent des segments de plaque s'étendant transversalement par rapport au côté amortisseur de choc (9) et au côté supérieur (11).

8. Défense (6) selon la revendication 7, dans laquelle les jonctions de paroi avant (16) et les jonctions de paroi arrière (17) sont parallèles les unes aux autres.

9. Défense (6) selon la revendication 8, dans laquelle les segments de plaque se coupent au niveau de la jonction intermédiaire (18), et la jonction intermédiaire (18) est parallèle aux jonctions de paroi avant (16) et aux jonctions de paroi arrière (17).

10. Défense (6) selon la revendication 8, dans laquelle la jonction intermédiaire (18) comprend un segment de plaque s'étendant en direction longitudinale de la défense (6).

11. Défense (6) selon la revendication 10, dans laquelle la jonction intermédiaire (18) s'étend parallèle au côté d'arrimage (10) et au côté amortisseur de choc (9).

12. Défense (6) selon la revendication 10 ou 11, dans laquelle les éléments de raccordement (15) et les jonctions intermédiaires (18) forment ensemble une structure en nid d'abeilles vus dans une direction du côté supérieur (11) au côté inférieur (12).

13. Défense (6) selon l'une des revendications précédentes, dans laquelle l'élément de raccordement (15) de côtés opposés de la jonction intermédiaire (18) est en quinconce.

14. Défense (6) selon l'une des revendications précédentes, dans laquelle les éléments de raccordement (15) et/ou la paroi avant (7) et/ou la paroi arrière (8) sont réalisés à partir d'un matériau résilient qui permet une extensibilité de plus de 50 % ou une extensibilité de plus de 100 %, et peuvent être réalisés en un élastomère homogène.

15. Défense (6) selon l'une des revendications précédentes, dans laquelle les éléments de raccordement (15) et/ou la paroi avant (7) et/ou la paroi arrière (8) comprennent des armures de renforcement respectives.

16. Défense (6) selon l'une des revendications précédentes, dans laquelle la défense est réalisée d'une seule pièce.

17. Navire (1) comprenant une défense (6) selon l'une des revendications précédentes.
